# EUROPEAN PATENT APPLICATION

(11) **EP 3 196 544 A1**
(43) Date of publication of application: **26.07.2017**
(21) Application number: 17151998.6
(22) Date of filing: 18.01.2017
(51) Int. Cl.: F21S 8/12

(54) **VEHICLE HEADLIGHT DEVICE**

(30) Priority: 25.01.2016 JP 2016011927
(71) Applicant: STANLEY ELECTRIC CO., LTD., Tokyo 153-8636 (JP)
(72) Inventor: SUZUKI, Satoshi, Tokyo, 153-8636 (JP)
(74) Representative: Wagner & Geyer

(57) **Abstract**

A vehicle headlight device capable of outputting various light distribution patterns with low power consumption is provided. The vehicle headlight device (1) includes: an array light source (5) configured to have a plurality of light-emitting elements arranged therein; a condensing lens (7) which condenses light output from the array light source (5); a light source control unit (13) which individually changes light emission volumes of the plurality of light-emitting elements; a digital mirror (8) which reflects, with a plurality of mirror elements, light entering from the condensing lens (7); a projector lens (9) which projects, in a irradiation region (S), a light distribution pattern of the light reflected on the digital mirror (8); and a control device (3) which controls the light emission volumes of the plurality of light-emitting elements and inclined forms of the mirror elements to change illuminance distribution of the light distribution pattern.

## Description

### BACKGROUND OF THE INVENTION

### Field of the Invention

The present invention relates to a vehicle headlight device.

### Description of the Related Art

In order to prevent a high beam used in night-time travelling from dazzling a driver of a preceding vehicle or an opposing vehicle, control of a light distribution pattern of light to avoid high beam irradiation has conventionally been performed upon detection of the preceding vehicle or the opposing vehicle with a camera which photographs a front of a host vehicle.

At this point, due to possibility that an obstacle or a pedestrian located in a region not irradiated with the high beam cannot be detected with the camera, a technique of changing illuminance distribution of the light distribution pattern and an irradiation range in accordance with surrounding environment and road condition has been known.

For example, there is a vehicle headlight which reflects light from one visible light source towards a front of a vehicle with a mirror device having an array of a plurality of micro-mirrors and which changes a reflection angle of each micro-mirror to thereby form a required light distribution pattern (see Japanese Patent Application Laid-open No. 2015-174551).

However, the vehicle headlight has one light source constantly activated with high illuminance for the purpose of ensuring a high-illuminance region, which therefore has raised a problem of great power consumption. To form a high-illuminance region at a desired position, there is a technique of changing the reflection angles of the micro-mirrors other than the one in charge of light distribution at the aforementioned position and reflecting light outwardly of the light distribution pattern. In other words, the high-illuminance region is realized by forming a region with relatively higher illuminance than other regions, thus inevitably facing light loss for the formation of the high-illuminance region. To prevent such light loss, it has been required to irradiate a mirror device with light from a plurality of light sources.

A vehicle headlight has also been suggested which includes: a light source unit having a plurality of light-emitting elements; and a turnable mirror unit which reflects and scans light from the light source unit (for example, Japanese Patent No. 5221174). However, performing the scanning over a wide range of an illumination region in a horizontal direction requires a mirror to be turned to some great extent. Thus, loads imposed on a turning mechanism of the mirror unit is great, leading to assumption that actual productization is difficult to achieve.

The vehicle headlight typically tends to have higher operation frequency for horizontal (right-to-left) light distribution control than for vertical light distribution control. Therefore, making the turning mechanism of the mirror unit to be in charge of the horizontal light scanning results in higher possibility that the mirror unit breaks down.

In the same Patent Document, a light source image (a light-emitting surface of a light source) is directly scanned in the horizontal direction. Thus, the horizontal light distribution can be controlled in the mirror unit, but the vertical light distribution cannot be controlled in the mirror unit. In other words, turning-on and turning-off of the light source unit are in charge of the vertical light distribution control. Thus, resolution in the vertical light distribution control consequently depends on a size of the light source image, making it difficult to perform detailed light distribution control.

### SUMMARY OF THE INVENTION

In view of such a circumstance, the present invention has been made, and it is an object of the invention to provide a vehicle headlight device capable of forming a high-illuminance region at a desired position with a configuration of low power consumption and a low possibility of breakdown.

The present invention refers to a vehicle headlight device which irradiates a front of a vehicle and which includes a plurality of light-emitting elements; an array light-emitting surface configured to have a light-emitting surface of the plurality of light-emitting elements arranged on a plane surface or a curved surface thereof; a light emission volume changing element which individually changes light emission volumes of the plurality of light-emitting elements; a condensing optical member which condenses light on the array light-emitting surface; a collection mirror which is configured to have an array of a plurality of inclinable mirror elements and which reflects, by each mirror element, light entering from the condensing optical member; a projection optical member which projects, in a predetermined irradiation region, a light distribution pattern of the light reflected on the collection mirror; and a control unit which executes at least either of a process of individually controlling the light emission volumes of the plurality of light-emitting elements via the light emission volume changing element and a process of controlling inclined forms of the plurality of mirror elements of the collection mirror, to thereby change illuminance distribution of the light distribution pattern (a first aspect of the invention).

In the first aspect of the invention, light output from the array light-emitting surface is condensed by the condensing optical member, entering the collection mirror. Then the collection mirror reflects, towards the projection optical member, the light entering from the condensing optical member.

At this point, the control unit individually switches the light emission volumes (including turning-on and turning-off) of the plurality of light-emitting elements forming the array light-emitting surface. The control unit also controls the inclined forms of the plurality of mirror elements forming the collection mirror to thereby form a light distribution pattern having regions with different illuminance levels. In this case, the light emission volume of each light-emitting element increases or decreases in accordance with illuminance distribution of a required light distribution pattern. As a result, the vehicle headlight device is capable of reducing power consumption of the light-emitting element forming a low-illuminance region.

In the first aspect of the invention, the light-emitting elements on the array light-emitting surface are arranged in a direction serving as a horizontal direction of the light distribution pattern. (a second aspect of the invention).

With the configuration described above, the light-emitting elements on the array light-emitting surface are arranged in the direction serving as the horizontal direction of the light distribution pattern. As a result, the vehicle headlight device is capable of appropriately controlling illuminance distribution of an irradiation region in accordance with a situation of, for example, an object located in front of the vehicle.

In the first aspect of the invention, a diffusion plate is further included which is arranged between the array light-emitting surface and the condensing optical member and which diffuses light (a third aspect of the invention).

With the configuration described above, the diffusion plate is arranged between the array light-emitting surface and the condensing optical member, so that light output from the array light-emitting surface is irradiated to the diffusion plate and diffused light passes through the condensing optical member and enters the collection mirror.

In the second aspect of the invention, a diffusion plate may be included which is arranged between the array light-emitting surface and the condensing optical member and which diffuses light.

In the third aspect of the invention, the diffusion plate is a phosphor plate of a transmissive type to which a phosphor is applied (a fourth aspect of the invention).

With the configuration described above, the light output from the array light-emitting surface is irradiated to the phosphor plate, and the light transmitted through the phosphor plate passes through the condensing optical member and enters the collection mirror. Gaps formed between the light-emitting elements on the array light-emitting surface may serve as a dark part upon formation of the light distribution pattern, but the light on the array light-emitting surface is slightly widened as a result of being transmitted through the phosphor plate. Then a lacking part of the light decreases upon the incidence thereof on the condensing optical member, thus finally permitting the vehicle headlight device to form a favorable light distribution pattern in an irradiation region.

In the first aspect of the invention, an object detection unit is further included which detects an object present in front of the vehicle, and the control unit individually adjusts, based on a detection situation of the object, the inclined forms of the plurality of mirror elements arranged at a predetermined portion of the collection mirror and the light emission volumes of the plurality of light-emitting elements to thereby form a light distribution pattern having a specific portion provided with reduced illuminance (a fifth aspect of the invention).

With the configuration described above, upon the detection of the object present in front of the vehicle by the object detection unit, the control unit individually adjusts the inclined forms of the mirror elements arranged at a predetermined portion of the collection mirror and the light emission volumes of the plurality of light-emitting elements. The control unit is also capable of guiding part of the light entering the collection mirror in a direction where the projection optical member is not present. As a result, the vehicle headlight device is capable of forming the light distribution pattern having the specific portion provided with the reduced illuminance. For example, it is possible for the vehicle headlight device to increase the illuminance in a region where the pedestrian is present and reduce the illuminance in a region where a preceding vehicle or an opposing vehicle is present.

In the second aspect of the invention, the object detection unit may be included which detects the object present in front of the vehicle, and the control unit may individually adjust, based on a detection situation of the object, the inclined forms of the plurality of mirror elements arranged at the predetermined portion of the collection mirror and the light emission volumes of the plurality of light-emitting elements to thereby form the light distribution pattern having the specific portion provided with the reduced illuminance.

In the third aspect of the invention, the object detection unit may be included which detects the object present in front of the vehicle, and the control unit may individually adjust, based on a detection situation of the object, the inclined forms of the plurality of mirror elements arranged at the predetermined portion of the collection mirror and the light emission volumes of the plurality of light-emitting elements to thereby form the light distribution pattern having the specific portion provided with the reduced illuminance.

In the fourth aspect of the invention, the object detection unit may be included which detects the object present in front of the vehicle, and the control unit may individually adjust, based on the detection situation of the object, the inclined forms of the plurality of mirror elements arranged at the predetermined portion of the collection mirror and the light emission volumes of the plurality of light-emitting elements to thereby form the light distribution pattern having the specific portion provided with the reduced illuminance.

### BRIEF DESCRIPTION OF THE DRAWINGS

FIG. 1 illustrates configuration of a vehicle headlight device according to an embodiment of the present invention;
FIG. 2 illustrates arrangement of light-emitting elements of an array light source;
FIG. 3 is an overall perspective view of a digital mirror;
FIG. 4A illustrates a light distribution pattern (1) formed through control of various LEDs;
FIG. 4B illustrates a light distribution pattern (2) formed through control of the various LEDs;
FIG. 4C illustrates a light distribution pattern (3) formed through control of the various LEDs;
FIG. 5 illustrates a light distribution pattern (4) formed through control of the various LEDs;
FIG. 6A illustrates an example of a photographed image taken by a camera; and
FIG. 6B illustrates an example of a light distribution pattern formed in an irradiation region.

### DESCRIPTION OF THE PREFERRED EMBODIMENTS

Hereinafter, a vehicle headlight device according to an embodiment of the present invention will be described.

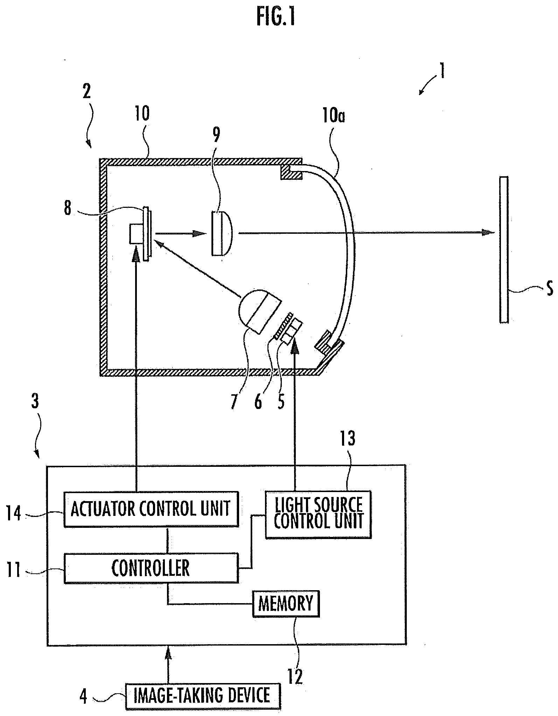

FIG. 1 is a configuration view of the vehicle headlight device 1. The vehicle headlight device 1 is loaded in a vehicle for use, and mainly includes: an optical system device 2, a control device 3, and an image-taking device 4. In the vehicle headlight device 1, the image-taking device 4 provided at front of the vehicle (for example, on a front glass side of a back mirror) photographs an image of a front of the vehicle. Then the control device 3 acquires and analyzes image information and controls the optical system device 2. As a result, the front of the vehicle is irradiated with a predetermined light distribution pattern.

The optical system device 2 includes an array light source 5, a phosphor plate 6, a condensing lens 7, a digital mirror 8, and a projector lens 9, which are all stored in a casing 10. The array light source 5 has a plurality of light-emitting diodes (LEDs) arranged in a row and stored in one package.

The LEDs ("light-emitting elements" of the invention) forming the array light source 5 ("array light-emitting surface" of the invention) can individually be subjected to on-off control and light volume control performed by a light source control unit 13 ("a light emission volume changing element" of the invention) to be described later on. For example, in a case where three LEDs are arranged, the light source control unit 13 can perform control such that the light volumes of the LEDS located on both sides are 30% with respect to the light volume of the central LED.

The phosphor plate 6 is arranged between the array light source 5 and the condensing lens 7. The phosphor plate 6 has such property that emits fluorescence when irradiated with light output from the array light source 5. Slight gaps are provided between the LEDs of the array light source 5, and as a result of placing the phosphor plate 6, light output from the array light source 5 enters the condensing lens 7 with a diameter of the light enlarged. Note that the phosphor plate 6 is one example of a "diffusion plate" of the invention.

The condensing lens 7 ("a condensing optical member" of the invention) is arranged between the array light source 5 (or the phosphor plate 6) and the digital mirror 8. The light entering from the array light source 5 has a widening radiation angle, but is condensed through passage through the condensing lens 7 (of 10 mm in diameter) and enters the digital mirror 8. In FIG. 1, the condensing lens 7 is a convex lens but it is also possible to use the condensing lens 7 in combination with a collimator lens. It is also possible to use, for example, a reflection optical system of a Cassegrain type in place of the condensing lens 7.

The digital mirror 8 ("a collection mirror" of the invention) reflects the light entering from the condensing lens 7 and emanates the light mainly towards the projector lens 9. The digital mirror 8 is structured to have a plurality of mirror elements so arranged in an array as to be capable of inclination. An actuator control unit 14, to be described later on, is capable of controlling an inclined form (reflection angle) of each mirror element.

The projector lens 9 ("a projection optical member" of the invention) is arranged between the digital mirror 8 and an irradiation region S. Light entering from the digital mirror 8 passes through the projector lens 9 (of 25 mm in diameter) and a translucent cover 10a of the casing 10 and is imaged in the irradiation region S located in front of the vehicle. Note that the optical system device 2 is loaded on at least each of right and left sides at the front of the vehicle.

The control device 3 ("a control unit" of the invention) includes at least a controller 11, a memory 12, a light source control unit 13, and an actuator control unit 14. The controller 11 calculates a light distribution pattern based on a signal of the photographed image of the front of the vehicle obtained by the image-taking device 4. The controller 11 also outputs, to the light source control unit 13 and the actuator control unit 14, a control signal for irradiating the light to the irradiation region S with the calculated light distribution pattern.

The memory 12 includes: a RAM used for temporarily storing predetermined data upon the execution of the calculation performed by the controller 11; a ROM storing data of programs to be executed by the controller 11; and a predetermined non-volatile storage device.

The light source control unit 13 controls on-off switching of the array light source 5 of the optical system device 2, changing of light emission volumes, and a driving power supplied to the array light source 5. The actuator control unit 14 supplies a driving power to the digital mirror 8 of the optical system device 2 and also adjusts the inclined form of each mirror element.

The image-taking device 4 ("an object detection unit" of the invention) may be any of those which can photograph the front of the vehicle. Examples of the image-taking device 4 includes a digital camera capable of photographing visible light and an infrared ray. A camera which monitors a pedestrian and an obstacle may be used in combination for the purpose of, for example, preventing vehicle collision.

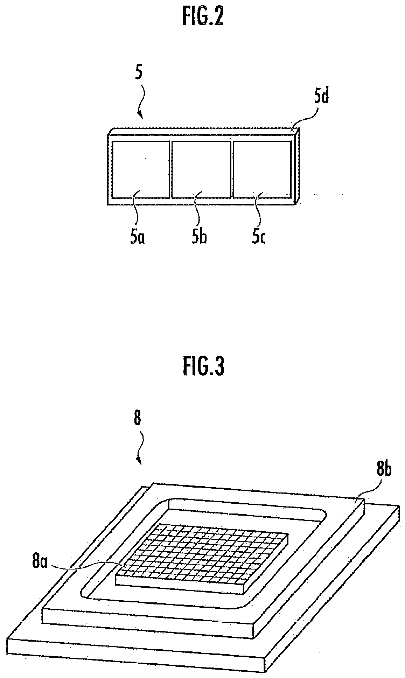

Next, FIG. 2 illustrates an overall view of the array light source 5.

The array light source 5 includes LEDs 5a to 5c each formed of a 1 mm square (for example, with a wavelength of 460 nm), and the LEDs are arranged in a direction serving as a horizontal direction of the light distribution pattern.

The LEDs 5a to 5c are stored in an LED package 5d with slight gaps provided therebetween. Here, the slight gaps provided between the LEDs may be projected directly in the irradiation region S, consequently forming a dark part in the light distribution pattern. Thus, with the phosphor plate 6 arranged between the array light source 5 and the condensing lens 7, the light is absorbed and guided to the condensing lens 7. As a result, the dark part formed by the gaps provided between the LEDs is finally not formed in the light distribution pattern in the irradiation region S. Note that it is possible to use a diffusion plate in place of the phosphor plate 6 to achieve the same effects. In this case, phosphors are individually arranged on light-emitting surfaces of the LEDs 5a to 5c, and the diffusion plate is arranged further in front thereof.

For example, a larger array light source which includes a total of 15 LEDs (an arrangement of 3×5) each formed of a 0.5 mm square may be used as the array light source. A wavelength of the LED is changeable as appropriate.

Next, FIG. 3 illustrates an overall perspective view of the digital mirror 8.

The digital mirror 8 has a mirror package 8b storing a mirror unit 8a (sized approximately 10 mm×30 mm) which has an array of mirror elements each formed of a square of several tens of micrometers. Each of the mirror elements is capable of reflecting incident light in two directions (for example, either +12° or -12°).

In the optical system device 2, when the incident light is reflected in one direction by the mirror elements, the light travels towards the projector lens 9, turning into light forming a light distribution pattern. When the incident light is reflected in the other direction by the mirror elements, the light deviates from the projector lens 9, thus forming a light blocking pattern that blocks the light distribution pattern.

Specifically, it is possible to form various light distribution patterns in the irradiation region S through the control of the inclined forms of the mirror elements by the actuator control unit 14. Moreover, light output from the array light source 5 is transmitted through the phosphor plate 6 to thereby enter the digital mirror 8 while widened to some extent. Since the actuator control unit 14 performs detailed control of the mirror elements, a final light distribution pattern does not become fuzzy.

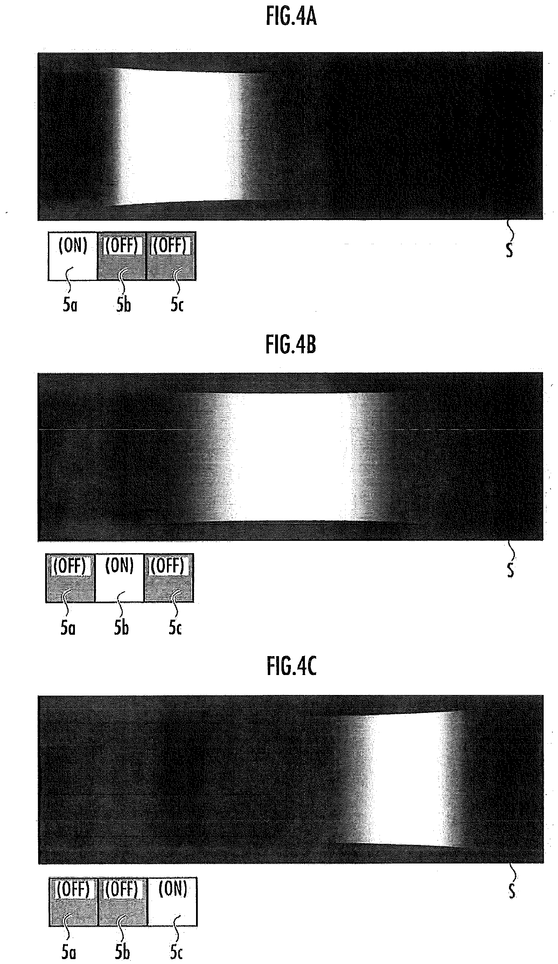

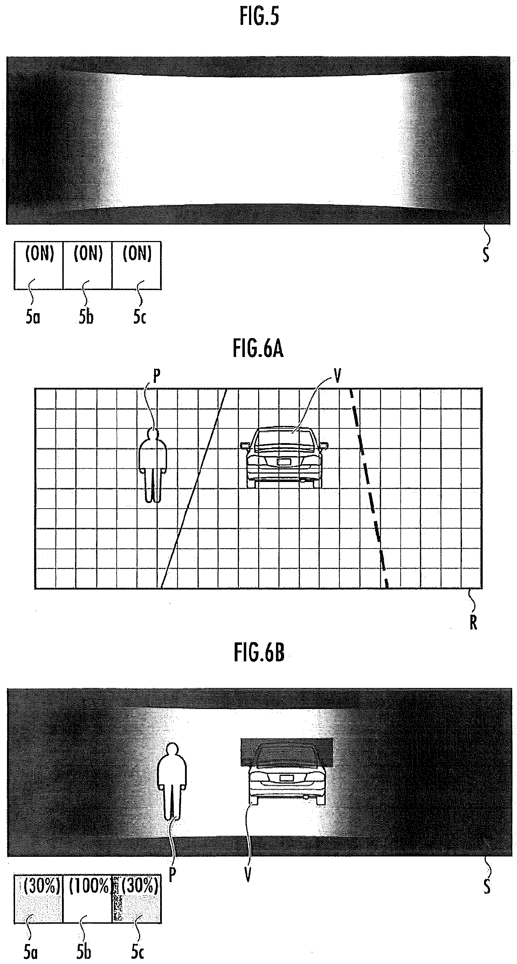

Next, light distribution patterns formed through the control of each LED will be described with reference to FIGS. 4A to 4C and FIG. 5.

The LEDs 5a, 5b, and 5c of the array light source 5 form light distribution patterns with different illuminance levels in the irradiation region S located in front of the vehicle. The light distribution pattern formed in a case where only the LED 5a is lighted has a high-illuminance region on a left side of the irradiation region S, as illustrated in FIG. 4A. The illuminance decreases towards a central part of the irradiation region S and finally reaches zero on a right side thereof.

The light distribution pattern formed in a case where only the LED 5b is lighted has a high-illuminance region at a central part of the irradiation region S, as illustrated in FIG. 4B. The illuminance decreases towards both sides of the irradiation region S. The light distribution pattern formed in a case where only the LED 5c is lighted has a high-illuminance region on a right side of the irradiation region S, as illustrated in FIG. 4C. The illuminance decreases towards a central part of the irradiation region S and reaches zero on a left side thereof.

The light source control unit 13 is also capable of adjusting respective light volumes of the LEDs 5a, 5b, and 5c to form a light distribution pattern. For example, in a case where degrees of lighting of the LEDs 5a and 5c are both 30% with respect to the light volume of the LED 5b, a central part is formed as a high-illuminance region. Then distribution is provided such that the illuminance increasingly and smoothly decreases towards both sides. Individually changing the light volumes of the LEDs in the manner described above permits movement of the high-illuminance region. In a region where low illuminance is permitted, the LEDs are turned off and the light volumes are suppressed, thereby leading to reduced power consumption.

FIG. 5 illustrates the light distribution pattern provided in a case where all the LEDs 5a, 5b, and 5c are lighted. In this case, the almost entire irradiation region S, excluding small regions at the both ends, is formed as a high-illuminance region. Although not illustrated, the light source control unit 13 is capable of turning on any two of the LEDs and turning off the remaining one thereof and adjusting, in this state, the light volume of each LED to thereby form various light distribution patterns.

Finally, the light distribution pattern formed in the irradiation region S will be described with reference to FIGS. 6A and 6B.

First, FIG. 6A illustrates an example of a photographed image R obtained by photographing the front of the vehicle with the image-taking device 4. FIG. 6A refers to a case where the image-taking device 4 detects a preceding vehicle V and a pedestrian P, displaying the preceding vehicle V at a center part of the photographed image R and the pedestrian P on a left side thereof.

For example, the image-taking device 4 judges that an object present in front of lights on both sides of the vehicle is a vehicle and judges based on two legs and a head shape that another object present in front is a person. At this point, a series of processes from the outputting of light from the array light source 5 to the formation of a light distribution pattern in the irradiation region S are performed in the vehicle headlight device 1.

Next, FIG. 6B illustrates an example of a light distribution pattern formed through analysis of the aforementioned photographed images R. Portions corresponding to both sides of the photographed images R, where no object is present, may have low illuminance, and thus the degrees of lighting of the LEDs 5a and 5c are 30% here with respect to the light volume of the LED 5b.

In a region of the photographed image R where the preceding vehicle V is present, illuminance of an upper half portion of the vehicle is reduced for the purpose of not dazzling a driver of the preceding vehicle V. More specifically, the actuator control unit 14 of the control device 3 adjusts the inclined form of part of the mirror elements of the digital mirror 8 in a manner such that part of the light output from the array light source 5 does not enter the projector lens 9. As a result, the control device 3 provides a light-blocking pattern to the region of the upper portion of the preceding vehicle V.

Further, in a region of the photographed image R where the pedestrian P is present, the illuminance needs to be increased to some extent so that the driver is capable of viewing movement of the pedestrian P. The region where the pedestrian P is present is a region corresponding to the LED 5a provided with the reduced illuminance, and through control of the inclined forms of the mirror elements by the actuator control unit 14, light is condensed. The vehicle headlight device 1 is capable of forming an appropriate light distribution pattern in accordance with a detection situation of an object present in front of the vehicle in the manner described above.

The vehicle headlight device 1 condenses, with the condensing lens 7, the light output from the array light source 5 arranged to have the plurality of LEDs, as described above. Then the vehicle headlight device 1 reflects the light on the digital mirror 8 structured to have the array of the plurality of mirror elements, and forms a light distribution pattern in the irradiation region S through the projector lens 9. At this point, the control device 3 of the vehicle headlight device 1 controls light emission volumes of the LEDs and the digital mirror to change illuminance distribution of the light distribution pattern. As a result, the vehicle headlight device 1 is capable of outputting various light distribution patterns with low power consumption.

The embodiment described above is just one example of an embodiment of the invention, and other various modified examples are also possible. For example, in addition to the LED arrangement (1×3) of the array light source of FIG. 2, it is possible to change the LED arrangement in accordance with a size and resolution of a required light distribution pattern. In addition, a light source may be used which includes a bundle of a large number of optical fibers and a plurality of light-emitting surfaces. Even with such a light source, it is possible to individually control turning-on and turning-off of the light on each light-emitting surface or a light volume thereof.

The phosphor plate 6 is not an essential component of the vehicle headlight device 1, and it is possible to form a light distribution pattern without the phosphor plate 6. In a case where the phosphor plate 6 is used, the phosphor plate 6 is preferably so arranged to make contact with the array light source 5, in which case loss of the light volume is small.

### [Description of Reference Numerals]

- 1: vehicle headlight device
- 2: optical system device
- 3: control device (control unit)
- 4: image-taking device (object detection unit)
- 5: array light source (array light-emitting surface)
- 5a, 5b, 5c: LED (light-emitting element)
- 5d: LED package
- 6: phosphor plate
- 7: condensing lens (condensing optical member)
- 8: digital mirror (collection mirror)
- 8a: mirror unit
- 8b: mirror package
- 9: projector lens (projection optical member)
- 10: casing
- 10a: translucent cover
- 11: controller
- 12: memory
- 13: light source control unit (light emission volume changing element)
- 14: actuator control unit

## Claims

1. A vehicle headlight device irradiating a front of a vehicle, the vehicle headlight device comprising:
a plurality of light-emitting elements;
an array light-emitting surface configured to have a light-emitting surface of the plurality of light-emitting elements arranged on a plane surface or a curved surface thereof;
a light emission volume changing element which individually changes light emission volumes of the plurality of light-emitting elements;
a condensing optical member which condenses light on the array light-emitting surface;
a collection mirror which is configured to have an array of a plurality of inclinable mirror elements and which reflects, by each of the mirror elements, light entering from the condensing optical member;
a projection optical member which projects, in a predetermined irradiation region, a light distribution pattern of the light reflected on the collection mirror; and
a control unit which executes at least either of a process of individually controlling the light emission volumes of the plurality of light-emitting elements via the light emission volume changing element and a process of controlling inclined forms of the plurality of mirror elements of the collection mirror, to thereby change illuminance distribution of the light distribution pattern.

2. The vehicle headlight device according to claim 1, wherein
the light-emitting elements on the array light-emitting surface are arranged in a direction serving as horizontal and vertical directions of the light distribution pattern.

3. The vehicle headlight device according to claim 1 or 2, further comprising,
a diffusion plate which is arranged between the array light-emitting surface and the condensing optical member and which diffuses light.

4. The vehicle headlight device according to claim 3, wherein
the diffusion plate is a phosphor plate of a transmissive type to which a phosphor is applied.

5. The vehicle headlight device according to any one of claims 1 to 4, further comprising
an object detection unit which detects an object present in front of the vehicle, wherein
the control unit individually adjusts, based on a detection situation of the object, the inclined forms of the plurality of mirror elements arranged at a predetermined portion of the collection mirror and the light emission volumes of the plurality of light-emitting elements to thereby form a light distribution pattern having a specific portion provided with reduced illuminance.
